# EUROPÄISCHE PATENTSCHRIFT

(11) **EP 2 505 783 B1**
(45) Veröffentlichungstag und Bekanntmachung des Hinweises auf die Patenterteilung: **14.08.2019**
(21) Anmeldenummer: 12161401.0
(22) Anmeldetag: 27.03.2012
(51) Int. Cl.: F01D 5/14, F01D 5/10, F01D 5/34

(54) **Rotor einer Axialverdichterstufe einer Turbomaschine**
Rotor of an axial compressor stage of a turbo machine
Rotor d'un étage de compresseur axial d'une turbomachine

(30) Priorität: 28.03.2011 DE 102011006273
(43) Veröffentlichungstag der Anmeldung: 03.10.2012
(73) Patentinhaber: Rolls-Royce Deutschland Ltd & Co KG, 15827 Blankenfelde-Mahlow (DE)
(72) Erfinder: Heinichen, Frank, 12101 Berlin (DE); Johann, Erik, 10963 Berlin (DE)
(74) Vertreter: Maikowski & Ninnemann Patentanwälte Partnerschaft mbB

(56) Entgegenhaltungen:
- EP-A1- 1 760 257
- EP-A2- 1 199 439
- EP-A2- 1 239 116
- DE-A1-102008 021 053
- GB-A- 2 281 356
- US-A1- 2008 232 968

## Beschreibung

Die Erfindung betrifft einen Rotor einer Axialverdichterstufe einer Turbomaschine. Derartige Rotoren werden beispielsweise in Strahltriebwerken eingesetzt. Axialverdichter bestehen üblicherweise aus einer Mehrzahl von Verdichterstufen, die jeweils einen Rotor und einen Stator umfassen, die unmittelbar hintereinander geschaltet sind. An dem Rotor sind eine Vielzahl von aerodynamisch geformten Körpern angeordnet, die als Laufschaufeln bezeichnet werden. Ebenso sind an dem Stator eine Vielzahl aerodynamisch geformter Körper angeordnet, die als Leitschaufeln bezeichnet werden. Die Laufschaufeln und die Leitschaufeln befinden alternierend sich in einem Strömungskanal des Verdichters.

Aus der Druckschrift EP 1 087 100 B1 ist eine Rotorkonfiguration bekannt, bei der die äußere Oberfläche des Umfangskranzes des Rotors im Bereich zwischen zwei Laufschaufeln konkav gekrümmt ist. Hierdurch soll die Kurzzeitschwingfestigkeit ("low cycle fatigue") des Umfangskranzes verbessert werden. EP1760257 offenbart eine Kranzoberfläche in dreidimensionaler Form.

Es besteht ein Bedarf nach technischen Lösungen, die die Strömung im Schaufelkanal zwischen jeweils zwei Laufschaufeln eines Rotors verbessern. Insbesondere ist es anzustreben, ungünstige Schwingungsmoden von Drehkörper und Laufschaufeln eines Rotors zu reduzieren und dadurch eine Schaufelanregung abzuschwächen.

Die Lehre des Anspruchs 1 sieht hierzu vor, dass bei einem Rotor mit einem Drehkörper, der an seinem Umfang einen Schaufelkranz mit einer radial außen liegenden Kranzoberfläche ausbildet, die Kranzoberfläche zwischen zwei benachbarten Laufschaufeln zumindest in einem Teilbereich sowohl in axialer Richtung als auch in Umfangsrichtung einen sich verändernden Radius bezogen auf die Drehachse des Drehkörpers aufweist.

Die erfindungsgemäße Lösung sieht somit vor, die Fläche zwischen zwei Laufschaufeln dreidimensional zu konturieren. Insbesondere ist vorgesehen, dass sich der Radius der Kranzoberfläche sowohl in axialer Richtung (d.h. in Strömungsrichtung) als auch in Umfangsrichtung des Rotors verändert. Dies bedeutet, dass - in zumindest einem Teilbereich der Kranzoberfläche - benachbarte Punkte der Kranzoberfläche sowohl in Umfangsrichtung als auch in axialer Richtung einen unterschiedlichen Abstand zur Drehachse des Drehkörpers aufweisen.

Die erfindungsgemäße dreidimensionale Konturierung der Kranzoberfläche lässt im Stand der Technik vorherrschende Symmetrieeinschränkungen in der Gestaltung der Kranzoberfläche hinter sich. Hierdurch ergeben sich neue Freiheitsgrade in der Gestaltung der Kranzoberfläche, die es erlauben, die Strömung im Schaufelkanal günstig zu beeinflussen. Dabei können durch die dreidimensionale Konturierung der Kranzoberfläche ungünstige Schwingungsmoden des Drehkörpers, der in einer Ausführungsvariante als Scheibe oder beschaufelte Scheibe (BLISK = "Bladed Disk") ausgebildet ist, vermindert oder sogar unterdrückt werden. Ebenso kann eine Belastung aus gekoppelten Schwingungsmoden des Drehkörpers mit den Laufrädern vermindert werden, so dass insgesamt die Schaufelanregung abgeschwächt werden kann.

Damit ermöglicht es die erfindungsgemäße Lösung, bei gleicher Verdichterauslegung die Höchstbelastung der Verdichterschaufeln zu reduzieren und in einer Ausführungsvariante den Bereich höchster Spannung an den Laufrädern auf der Druckseite und der Saugseite gleichmäßig zu verteilen, und zwar ohne die Notwendigkeit eines Kippens der Schaufeln (sogenanntes "blade lean"). Die Erfindung stellt ein optimiertes Design mit geringerem Gewicht und potentiell längerer Lebensdauer bereit. Erfindungsgemäße Rotoren können jedenfalls bei Nutzen der BLISK-Technologie ohne Mehrkosten hergestellt werden, da die Rotoren ohnehin aus dem Vollen gefertigt sind. So kann die Kranzoberfläche ohne fertigungstechnischen Mehraufwand eine dreidimensionale Konturierung erfahren.

Es wird darauf hingewiesen, dass die dreidimensionale Konturierung der Kranzoberfläche im Bereich einer auf dem Drehkörper angeordneten oder ausgebildeten Laufschaufel naturgemäß unterbrochen ist, da in diesem Bereich die Laufschaufel angeordnet ist. Der Übergang zwischen der Kranzoberfläche und den Laufschaufeln kann dabei im mathematischen Sinne unstetig (als Kante) oder stetig (unter Realisierung eines Ausrundungsradius) ausgebildet sein. Eventuell vorhandene Übergangsbereiche, die einen Ausrundungsradius zwischen der Kranzoberfläche und einer Laufschaufel realisieren, stellen dabei im Sinne der vorliegenden Erfindung einen Teilbereich der Laufschaufel dar, und nicht einen Teilbereich der Kranzoberfläche. Da solche Übergangsbereiche einen definierten Ausrundungsradius aufweisen, sind sie eindeutig von der Kranzoberfläche unterscheidbar. Als Kranzoberfläche im Sinne der vorliegenden Erfindung werden somit Oberflächenbereiche eines Schaufelkranzes axial vor und/oder axial hinter und/oder in Umfangsrichtung zwischen den Laufschaufeln bezeichnet, nicht jedoch die Laufschaufeln selbst und Übergangsbereiche zu den Laufschaufeln.

Weiter wird vorsorglich darauf hingewiesen, dass die erfindungsgemäße Änderung des Radius sowohl in axialer Richtung als auch in Umfangsrichtung derart stark ausgebildet ist, dass sie außerhalb des Toleranzbereiches einer Oberflächenbearbeitung liegt. Die erfindungsgemäße Konturierung stellt eine strömungsbeeinflussende dreidimensionale Konturierung der Kranzoberfläche bereit.

In einer Ausgestaltung der Erfindung ist vorgesehen, dass für zumindest einen Schnitt durch den Schaufelkranz in einer Ebene senkrecht zur Drehachse des Drehkörpers gilt, dass die resultierende Oberflächenlinie zwischen zwei Laufschaufeln zumindest abschnittsweise einen sich stetig verändernden Radius aufweist. Wenn man ein Zylinderkoordinatensystem betrachtet mit den drei Koordinaten a) Umfangswinkel (Φ), b) Abstand (r) von der Drehachse und c) Koordinate in axialer Richtung (x), so entspricht ein Schnitt durch den Schaufelkranz in einer Ebene senkrecht zur Drehachse des Drehkörpers einem Schnitt durch die Kranzoberfläche bei einem festen axialen Wert (x). Bei der genannten Erfindungsvariante gilt mit anderen Worten, dass sich bei der Oberflächenlinie der Radius (r) zwischen zwei Laufschaufeln in Abhängigkeit von Umfangswinkel (Φ) stetig ändert. Ein solcher Verlauf in Umfangsrichtung gilt für zumindest einige axiale Werte (x) und in einer Ausgestaltung für alle axialen Werte (x), also für die gesamte Kranzoberfläche.

In einer weiteren Ausgestaltung der Erfindung ist vorgesehen, dass für zumindest einen Schnitt durch den Schaufelkranz in einer Ebene senkrecht zur Drehachse des Drehkörpers gilt, dass die resultierende Oberflächenlinie im Bereich zwischen zwei Laufschaufeln asymmetrisch ist. Ein symmetrischer Verlauf in Umfangsrichtung zwischen zwei Laufschaufeln wird bei dieser Ausführungsvariante aufgegeben, mit der Folge einer größeren Designfreiheit. Dass das genannte Merkmal für zumindest einen Schnitt gelten soll, bedeutet dabei, dass es für einen der möglichen Schnitte, eine Minderzahl der möglichen Schnitte, eine Mehrzahl der möglichen Schnitte oder alle Schnitte gilt, wobei angenommen wird, dass zwei Schnitte identisch sind, solange sie nicht einen Mindestabstand zueinander aufweisen.

In einer Ausführungsvariante hierzu ist vorgesehen, dass die Kranzoberfläche angrenzend an die Saugseite der einen Laufschaufel höhere Radien aufweist als angrenzend an die Druckseite der anderen, benachbarten Laufschaufel. An der Saugseite ist somit eine konvexe Erhöhung bzw. ein Berg realisiert, während an der Druckseite eine konvexe Vertiefung bzw. ein Tal realisiert ist. Hierdurch kann in einer Ausführungsvariante erreicht werden, dass Spannungen auf der Druckseite und der Saugseite gleichmäßiger verteilt werden.

In einer weiteren Ausführungsvariante ist vorgesehen, dass für zumindest einen Schnitt durch den Schaufelkranz in einer Ebene senkrecht zur Drehachse des Drehkörpers gilt, dass die resultierende Oberflächenlinie zwischen zwei Laufschaufeln in zumindest einem Abschnitt konvex gewölbt ist. Es ist somit zumindest in einem Teilbereich der Kranzoberfläche ein Berg zwischen zwei benachbarten Laufschaufeln gebildet.

Eine Variation des Radius der Kranzoberfläche findet erfindungsgemäß auch in axialer Richtung statt. Im Folgenden werden einige Ausführungsbeispiele für eine entsprechende Oberflächenkonturierung in axialer Richtung betrachtet. Dabei wird jeweils ein Längsschnitt durch den Schaufelkranz und die dabei entstehende Oberflächenlinie zwischen einer axial vorderen Stirnseite und einer axial hinteren Stirnseite des Schaufelkranzes betrachtet. Ein solcher Längsschnitt entspricht bei einer Betrachtung in Zylinderkoordinaten einem Schnitt bei konstantem oder im wesentlichen konstanten Umfangswinkel (Φ). Die axial vordere Stirnseite kann auch als Schaufelvorderkante und die axial hintere Stirnseite als Schaufelhinterkante des Schaufelkranzes bezeichnet werden. Die Begriffe "vordere" und "hintere" beziehen sich auf die Strömungsrichtung.

In einer Ausgestaltung ist vorgesehen, dass die resultierende Oberflächenlinie zwischen einer vorderen Stirnseite und einer axial hinteren Stirnseite zumindest abschnittsweise einen sich stetig verändernden Radius aufweist.

In einer weiteren Ausgestaltung ist vorgesehen, dass die resultierende Oberflächenlinie zwischen einer vorderen Stirnseite und einer axial hinteren Stirnseite in zumindest einem Abschnitt konvex gewölbt, also als Berg ausgeführt ist. Eine Ausführungsvariante hierzu sieht vor, dass die Oberflächenlinie in Richtung der Schaufelhinterkante zunächst ein Minimum und anschließend einen Maximum durchläuft. Für die Kranzoberfläche bedeutet dies, dass diese in Richtung der Schaufelhinterkante zunächst ein Tal und anschließend einen Berg durchläuft. Hierdurch wird der Gasstrom in günstiger Weise in den Schaufelkanal hinein eingeleitet.

Die erfindungsgemäße dreidimensionale Gestaltung, die auf Symmetrien im Bereich der Oberflächengestaltung zwischen zwei Laufschaufeln verzichtet, erlaubt grundsätzlich eine beliebig große Anzahl an Freiheitsgraden für die Oberflächengestaltung. In einer Ausgestaltung der Erfindung ist vorgesehen, dass diese große Anzahl reduziert wird, indem eine erste Oberflächenlinie eines ersten Schnitts durch den Schaufelkranz in einer Ebene senkrecht zur Drehachse des Drehkörpers einer Sinusfunktion, einer Kosinusfunktion, oder einer Kombination von Sinus- und Kosinusfunktionen gehorcht. Mindestens eine zweite Oberflächenlinie eines zum ersten Schnitt benachbarten zweiten Schnitts durch den Schaufelkranz gehorcht der gleichen Funktion, wobei jedoch eine andere Phasenlage gegenüber der ersten Oberflächenlinie vorgesehen ist.

Mit anderen Worten weist jeder Schnitt durch die Kranzoberfläche, der in einer Ebene senkrecht zur Drehachse des Drehkörpers liegt, eine Oberflächenlinie auf, die durch eine oder mehrere Sinus- oder Kosinusfunktionen oder deren Kombination definiert wird. Bei Schnitten durch die Kranzoberfläche, die bei anderen axialen Werten (x) erfolgen, liegen die gleichen trigonometrischen Funktionen vor. Lediglich die Phasenlage und/oder die Amplitude wird in Abhängigkeit von der axialen Position (x) variiert. Hierdurch wird die Anzahl der Freiheitsgrade verringert, in einer Ausgestaltung auf 2 bis 5. Dies erlaubt beispielsweise eine vergleichsweise einfachere Programmierung einer Zerspanungsmaschine, mit deren Hilfe eine BLISK computergesteuert aus dem Vollen gefertigt wird.

Gemäß einer weiteren Ausführungsvariante ist die Kranzoberfläche an der axial vorderen und/oder der axial hinteren Stirnseite des Schaufelkranzes durchgehend kreisförmig ausgebildet. An der Eintrittsseite und/oder der Austrittsseite des Schaufelkranzes wird ein kreisförmiger Rand mit festem Radius bereitgestellt. Die dreidimensionale Konturierung flacht sich dementsprechend zu den Stirnseiten des Schaufelkranzes hin aus. Hierdurch wird ein verlustfreier Übergang von einer Schaufelreihe zu einer angrenzenden Schaufelreihe bereitgestellt.

Es ist in einer Ausgestaltung der Erfindung vorgesehen, dass die Kranzoberfläche zwischen sämtlichen Laufschaufeln des Rotors jeweils die gleiche dreidimensionale Form aufweist. Die Anordnung ist symmetrisch in Bezug auf eine Drehung um einen Winkel, der dem Abstand zwischen zwei Laufschaufeln entspricht.

Der betrachtete Drehkörper kann beispielsweise als Scheibe oder als Trommel ausgebildet sein. In einer Ausführungsvariante ist er, wie bereits erwähnt, in BLISK Technologie ausgeführt.

Die Erfindung wird nachfolgend unter Bezugnahme auf die Figuren der Zeichnung anhand mehrerer Ausführungsbeispiele näher erläutert. Es zeigen:
- Figur 1: eine Draufsicht in radialer Richtung auf einen Teilbereich eines Rotors, der einen Schaufelkranz mit einer dreidimensional konturierten Kranzoberfläche aufweist;
- Figur 2: eine perspektivische Ansicht eines weiteren Ausführungsbeispiels eines Rotors, der einen Schaufelkranz mit einer dreidimensional konturierten Kranzoberfläche aufweist;
- Figur 3A: schematisch eine Ansicht in Strömungsrichtung auf einen Schnitt quer zur Drehachse durch einen Rotor mit einer dreidimensional konturierten Kranzoberfläche, wobei die Radiusvariation der Kranzoberfläche dargestellt ist;
- Figur 3B: schematisch einen Längsschnitt durch einen Schaufelkranz mit einer dreidimensional konturierten Kranzoberfläche;
- Figur 4: einen Längsschnitt durch ein Ausführungsbeispiel eines Verdichters eines Strahltriebwerks, wobei dreidimensional konturierte Flächen zum einen am Rotor und zum anderen am Stator des Verdichters dargestellt sind;
- Figur 5: eine teilweise geschnittene Seitenansicht einer auf dem Schaufelkranz einer BLISK angeordneten Laufschaufel, wobei die Spannungsverteilung an der Laufschaufel und dem Schaufelkranz dargestellt ist;
- Figur 6: ein erstes Diagramm, das die mechanische Spannung an der Außenkante der Druckseite der Schaufel eines erfindungsgemäß ausgeführten Rotors im Vergleich zu einem konventionell ausgeführten Rotor zeigt; und
- Figur 7: ein zweites Diagramm, das die mechanische Spannung an der Außenkante der Saugseite der Schaufel eines erfindungsgemäß ausgeführten Rotors im Vergleich zu einem konventionell ausgeführten Rotor zeigt.

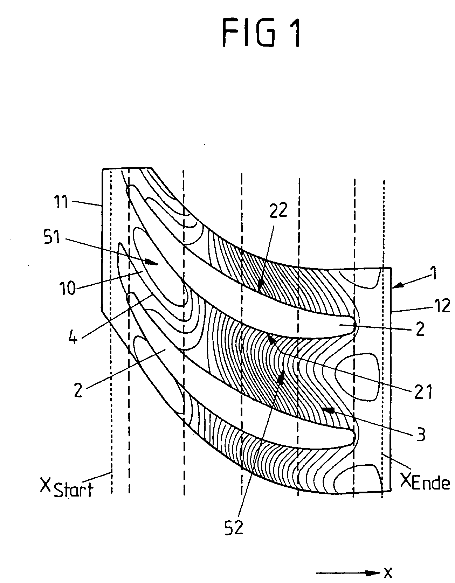

Die Figur 1 zeigt eine Draufsicht auf einen Teilbereich eines Schaufelkranzes 1 eines Rotors, der in die Zeichenebene abgewickelt ist. Der Schaufelkranz 1 weist eine axial vordere Stirnseite 11 und eine axial hintere Stirnseite 12 auf, zwischen denen sich eine außen liegende Oberfläche des Schaufelkranzes 1 erstreckt, die nachfolgend als Kranzoberfläche 10 bezeichnet wird. Auf dem Schaufelkranz 1 sind mehrere Laufschaufeln 2 angeordnet. Zwei benachbarte Laufschaufeln 2 bilden zwischen sich einen Schaufelkanal 3 aus, der einen Teil eines Ringraums bildet, der zwischen dem Schaufelkranz 1 und einem Umfangsgehäuse (nicht dargestellt) ausgebildet ist.

Jede Laufschaufel 2 weist eine Saugseite 21 und eine Druckseite 22 auf. Der Schaufelkanal 3 zwischen zwei Laufschaufeln 2 wird seitlich begrenzt durch die Saugseite 21 der einen Laufschaufel 2 und die Druckseite 22 der anderen Laufschaufel 2. In radialer Richtung wird der Schaufelkanal 3 radial innen durch die Kranzoberfläche 10 und radial außen durch die Oberfläche eines nicht dargestellten Gehäuses begrenzt.

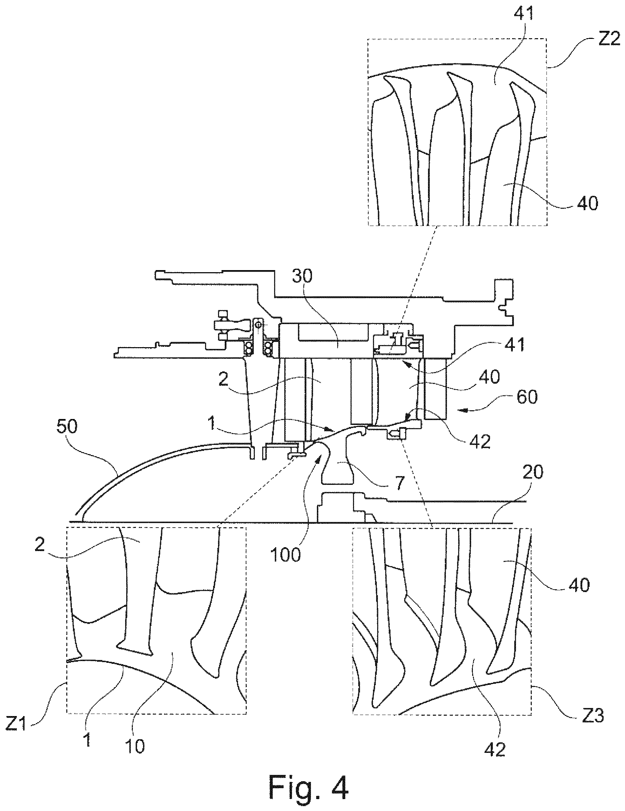

Die Kranzoberfläche 10 ist dreidimensional konturiert ist, d. h. sie weist sich verändernde Radien sowohl in axialer als auch in Umfangsrichtung auf. Die Radiusänderung ist stetig im mathematischen Sinne, d. h. sie weist keine Sprungstellen auf. Die dreidimensionale Konturierung ist durch in der Figur 1 dargestellte Höhenlinien 4 angegeben, wobei die jeweiligen Höhenlinien Linien mit konstantem Radius angeben. Der Radius bezieht sich auf den radialen Abstand zur Drehachse des Rotors, der den Schaufelkranz ausbildet (vgl. hierzu auch die Figur 4 unten).

Aus der Darstellung der Höhenlinien 4 ergibt sich, dass die Kranzoberfläche in axialer Richtung x (und dabei der Wölbung der Laufschaufeln 2 folgend) zunächst eine konkave Einbuchtung bzw. ein Tal 51 und anschließend eine konvexe Erhebung bzw. einen Berg 52 durchläuft. Auch ist zu erkennen, dass die Konturierung in Umfangsrichtung zwischen zwei Laufschaufeln 2 nicht symmetrisch ist. Insbesondere befindet sich der Berg 52 näher an der Saugseite 21 der jeweiligen Laufschaufel 2 als an der Druckseite 22.

Weiter ist in der Figur 1 zu erkennen, dass die dreidimensionale Konturierung der Kranzoberfläche 10 nicht bereits an den Stirnseiten 11, 12 des Schaufelkranzes 1 beginnt. An den Stirnseiten 11, 12 ist der Schaufelkranz 1 kreisförmig ausgebildet, so dass an der Eintrittsseite und an der Austrittseite ein rotationssymmetrischer Rand mit festem Radius bereitgestellt wird. Die dreidimensionale Konturierung beginnt erst ab einem axialen Wert x_{Start} (angedeutet durch eine gepunktete Linie), und sie endet bei einem axialen Wert x_{Ende}.

Ein kreisförmiger Rand mit konstantem Radius an der axial vorderen Stirnseite 11 und an der axial hinteren Stirnseite 12 ist dabei in einer Ausgestaltung der Erfindung, jedoch nicht notwendigerweise, realisiert, um einen möglichst verlustfreien Übergang von einer Schaufelreihe auf die nächste Schaufelreihe sicherzustellen.

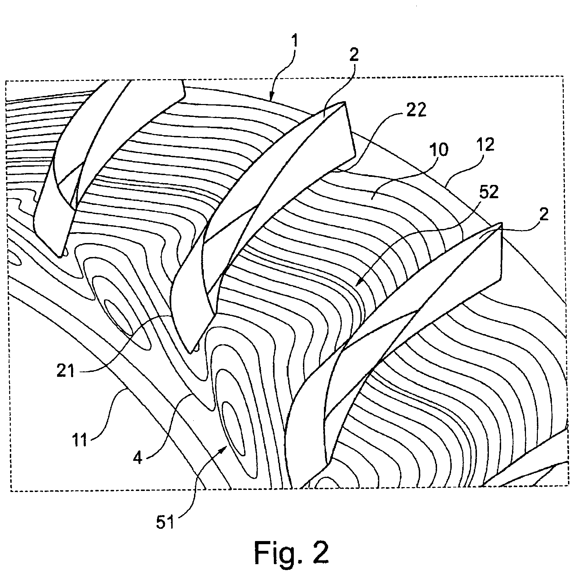

Die Figur 2 zeigt eine weitere dreidimensionale Konturierung einer Kranzoberfläche 10 eines Schaufelkranzes 1 in perspektivischer Ansicht. Dabei ist eine ähnliche, nicht jedoch die gleiche Konturierung wie in dem Ausführungsbeispiel der Figur 1 realisiert. Es sind wiederum mehrere Laufschaufeln 2 zu erkennen, die jeweils eine Saugseite 21 und eine Druckseite 22 aufgrund ihrer Krümmung aufweisen. Die Laufschaufeln 2 sind auf einem Schaufelkranz 1 mit einer Schaufeloberfläche 10 ausgebildet. Dabei kann, ebenso wie in dem Ausführungsbeispiel der Figur 1, vorgesehen sein, dass der Schaufelkranz 2 Teil einer BLISK ist, die Laufschaufeln 2 somit einstückig mit dem Drehkörper des Rotors ausgebildet sind, der den Schaufelkranz 1 bildet.

Auch bei der dreidimensionalen Oberflächenkonturierung der Figur 2 sind eine konkave Vertiefung 51 und eine konvexe Erhöhung 52 vorgesehen. Zu den axialen Stirnseiten 11, 12 hin flacht sich die dreidimensionale Konturierung ein, so dass in den Stirnseiten 11, 12 ein kreisförmiger Rand mit konstantem Radius vorliegt. Es wird jedoch darauf hingewiesen, dass in anderen Ausführungsbeispielen vorgesehen sein kann, dass sich die dreidimensionale Konturierung sich bis zu den Stirnseiten 11, 12 hin erstreckt.

Die dargestellte Konturierung mit einer konkaven Vertiefung 51 am Anfang des durch jeweils zwei Laufschaufeln 2 gebildeten Schaufelkanals und einer konvexen Erhöhung 52, die sich in axialer Richtung hinter der Vertiefung 51 befindet, verbessert die Strömung im Schaufelkanal, da die einströmende Luft mittels der Vertiefung 51 am Anfang des Schaufelkanals verlustarm in diesen einströmen kann. Zusätzlich zur verbesserten Aerodynamik erlaubt es die Konturierung, ungünstige Schwingungsmoden am Drehkörper und den Laufschaufeln 2 zu reduzieren und dadurch eine Schaufelanregung abzuschwächen.

Gleichzeitig wird darauf hingewiesen, dass die in den Figuren 1 und 2 dargestellte dreidimensionale Konturierung lediglich beispielhaft zu verstehen ist. Durch den Wegfall im Stand der Technik verlangte Symmetrien in der Gestaltung der Kranzoberfläche ergeben sich Freiheitsgrade in der Gestaltung der Kranzoberfläche, die auch zu anderen Konturierungen führen können. Beispielsweise kann vorgesehen sein, dass die Kranzoberfläche Vertiefungen und Erhöhungen aufweist, die an anderer Stelle, in anderer Größe und in anderer Zahl vorgesehen sind. Das Weiteren wird darauf hingewiesen, dass eine dreidimensionalen Konturierung auch durch eine Rampenfunktion realisiert sein kann, die keine Minima und Maxima aufweist. Bei einer Rampenfunktion nimmt der Radius in axialer Richtung linear oder im wesentlichen linear zu. Auch kann vorgesehen sein, dass eine solche Rampenfunkion einer komplexeren dreidimensionalen Konturierung überlagert ist.

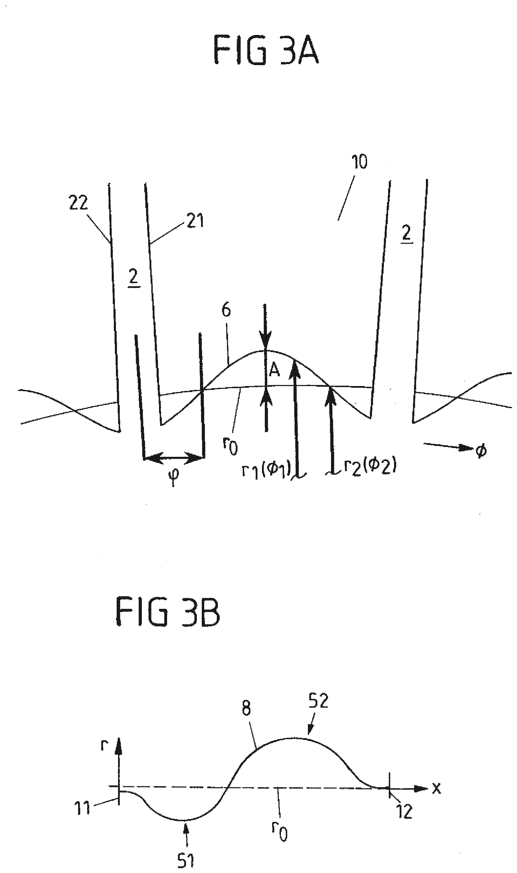

Die Figur 3A zeigt schematisch anhand einer Schnittansicht, die quer zur Drehachse des Rotors verläuft, ein Ausführungsbeispiel einer dreidimensionalen Konturierung einer Kranzoberfläche. Es sind zwei Laufschaufeln 2 mit jeweils einer Saugseite 21 und der Druckseite 22 zu erkennen. Zwischen diesen ist die Oberfläche 10 des Schaufelkranzes konturiert. Der dargestellte Schnitt resultiert in einer Oberflächenlinie 6, die die Variation des Radius r in Umfangsrichtung Φ angibt. Die Darstellung erfolgt dabei im Zylinderkoordinatensystem, wobei der Umfangswinkel Φ und der Abstand r von der (nicht dargestellten) Drehachse des Rotors angegeben sind. Der Radius r weist einen Mittelwert r₀ auf, um den herum der aktuelle Radius r in Abhängigkeit vom Umfangswinkel Φ variiert. Die Figur 3 zeigt dabei zwei beispielhafte Radien r₁, r₂ bei Umfangswinkeln Φ₁ und Φ₂.

Im dargestellten Ausführungsbeispiel folgt die Oberflächenlinie 6 einer Sinus- oder einer Kosinusfunktion. Diese zeichnet sich durch eine Periodenlänge, eine Phasenlage ϕ und eine Amplitude A, die sich auf den Durchschnittsradius r₀ bezieht, aus. Dabei gilt, dass der Radius r Werte zwischen r₀ + A und r₀ - A annehmen kann und zwischen diesen Werten variiert. Die Periodenlänge ist so gewählt, dass sie gleich der Laufschaufelteilung ist. Der Winkel ϕ gibt die Phasenlage der trigonometrischen Funktion 6 an.

Statt einer einzelnen Sinus- oder Kosinusfunktion, wie sie in der Funktion 3A dargestellt ist, kann auch eine Kombination von Sinus- und Kosinusfunktionen verwendet werden, jeweils eine bestimmte Periodenlänge, eine bestimmte Amplitude und eine bestimmte Phasenlage aufweisen. Die Periodenlänge ist dabei in einer Ausführungsvariante bei allen kombinierten Funktionen identisch und entspricht der Laufschaufelteilung.

Eine Modellierung der dreidimensionalen Fläche 10 mittels trigonometrischer Funktionen erlaubt es, in einfacher Weise, nämlich unter Verwendung weniger Parameter die Oberfläche 10 zu konstruieren. Dies ist insbesondere vorteilhaft bei der Programmierung einer Zerspanungsmaschine, mit deren Hilfe die Kranzoberfläche 10 konturiert wird.

In einer Ausgestaltung ist vorgesehen, dass die gesamte Kranzoberfläche 10 oder zumindest ein Teilbereich mittels der gleichen trigonometrischen Funktionen, im Ausführungsbeispiel der Figur 3A der trigonometrischen Funktion 6 aufgebaut wird. Hierzu ist vorgesehen, dass lediglich die Phasenlage ϕ und/oder die Amplitude in Abhängigkeit vom axialen Abstand x variiert wird. Damit liegt bei allen Schnitten durch die Kranzoberfläche 10 bei unterschiedlichen axialen Werten von x die gleiche trigonometrische Funktion 6 bzw. die gleiche Kombination trigonometrischer Funktionen vor. Es ist lediglich die Phasenlage ϕ und/oder die Amplitude A vom axialen Wert x abhängig.

Es wird angemerkt, dass durch eine graduelle Reduzierung der Amplitude A zu den axialen Stirnseiten 11, 12 hin in einfacher Weise eine Kreisform an den Stirnseiten 11, 12 erreicht werden kann.

In einer Ausführungsvariante kann vorgesehen sein, dass der Amplitude A linear abhängig von dem axialen Wert x zusätzlich ein Betrag aufaddiert wird, beispielsweise um eine dreidimensionale Konturierung in Verbindung mit einer aufsteigenden Rampe in Richtung der hinteren Stirnseite 12 zu realisieren.

Die Verwendung von Sinus- und Kosinusfunktionen oder deren Kombination erlaubt in einfacher Weise eine Parametrisierung der dreidimensionalen Form der Kranzoberfläche 10. Die Parameter, mit deren Hilfe die dreidimensionale Form der Kranzoberfläche 10 mathematisch beschrieben werden kann, sind auf eine geringe Anzahl verringert. Dies entspricht einer Reduktion der verfügbaren Freiheitsgrade. Dabei kann mit der beschriebenen Parametrisierung bereits eine sehr gute Auslegung der Wandflächen erfolgen. In einer Ausgestaltung liegt die Anzahl der Parameter bzw. Freiheitsgrade bei zwei bis fünf.

Die Figur 3B zeigt schematisch und beispielhaft einen Längsschnitt durch einen dreidimensional konturierten Schaufelkranz. Die dabei resultierende Oberflächenlinie 8 gibt den Radius r in Abhängigkeit vom axialen Wert x an. Die Darstellung erfolgt wieder unter Verwendung von Zylinderkoordinaten, nämlich der Zylinderkoordinaten r und x.

Dabei ist erkennbar, dass die Oberflächenlinie 8 zunächst Werte unterhalb des Durchschnittsradius r₀ aufweist. Dies entspricht einem in Figuren 1 und 2 dargestellten Tal 51. Im weiteren Verlauf nimmt die Oberflächenlinie 8 Werte oberhalb des Durchschnittsradius r₀ an. Dies entspricht einem in Figuren 1 und 2 dargestellten Berg 52. Die Form der Oberflächenlinie 8 ergibt sich bei der in Bezug auf die Figur 3A erläuterten Parametrisierung aus den Werten für A und ϕ in Abhängigkeit von x.

Die in den Figuren 3A und 3B angegebenen Schnitte definieren beispielhaft dreidimensionale Strukturierungen, die einen sich stetig verändernden Radius in Umfangsrichtung und in axialer Richtung definieren. Die in den Schnittdarstellungen der Figuren 3A, 3B definierten Oberflächenlinien 6, 8, und damit die Kranzoberfläche 10 insgesamt, können dabei asymmetrisch in Bezug auf die Anordnung jeweils zweier benachbarter Laufschaufeln 2 ausgebildet sein. In Ausführungsbeispielen ist der Verlauf der Kranzoberfläche zumindest in Teilbereichen sowohl in Umfangsrichtung als auch in axialer Richtung asymmetrisch. Auch ist in einem Ausführungsbeispiel vorgesehen, dass die dreidimensionale Oberflächenstrukturierung derart ist, dass die Kranzoberfläche 10 im Bereich zwischen zwei Laufrädern 2 mindestens eine konvexe Erhebung ausbildet. Dies kann allein oder in Kombination mit einer oder mehreren konkaven Vertiefungen realisiert sein.

Die Figur 4 zeigt in Schnittansicht den Anfangsbereich eines Ausführungsbeispiels eines Strahltriebwerks, wobei ein Einlaufkonus 50 mit einer Reihe von Eintrittsleitschaufeln und ein sich daran anschließender Verdichter 60 dargestellt sind.

Der Verdichter 60 umfasst Rotoren und Statoren, wobei die Rotoren sich um eine zentrale Drehachse 20 drehen. In der Figur 4 ist ein Rotor 100 dargestellt, der einen als Scheibe 7 ausgebildeten Drehkörper mit einem Schaufelkranz 1 und daran angeordneten Laufschaufeln 2 umfasst. Der Schaufelkranz 1 weist eine dreidimensional konturierte Kranzoberfläche 10 auf, wie sie vorstehend beschrieben wurde. Die Detailansicht Z1 zeigt in perspektivischer Ansicht den Schaufelkranz 1 mit der dreidimensional konturierten Kranzoberfläche 10 und Laufschaufeln 2.

Im Ausführungsbeispiel der Figur 4 ist vorgesehen, dass ebenfalls die Statoren 40 dreidimensional konturierte Oberflächen ausbilden, die einen Leitschaufelkanal radial innen und radial außen begrenzen. So ist sowohl an einer radial äußeren, gehäuseseitigen Oberfläche 41 als auch an einer radial inneren, nabenseitigen Oberfläche 42 eine dreidimensionale Strukturierung vorgenommen, die ebenso wie die Strukturierung der Kranzoberfläche 10 sich sowohl in axialer Richtung als auch in Umfangsrichtung sich verändernde Radien aufweist. Eine solche dreidimensionale Konturierung ebenfalls im Bereich des Stators 40 ist jedoch nur optional. Sie kann, sofern sie vorhanden ist, sowohl an beiden Oberflächen 41, 42 als auch an nur einer dieser Oberflächen 41, 42 realisiert sein. Die Details Z2 und Z3 der Figur 4 zeigen jeweils die dreidimensional konturierten Oberflächen 41, 42 im Statorbereich.

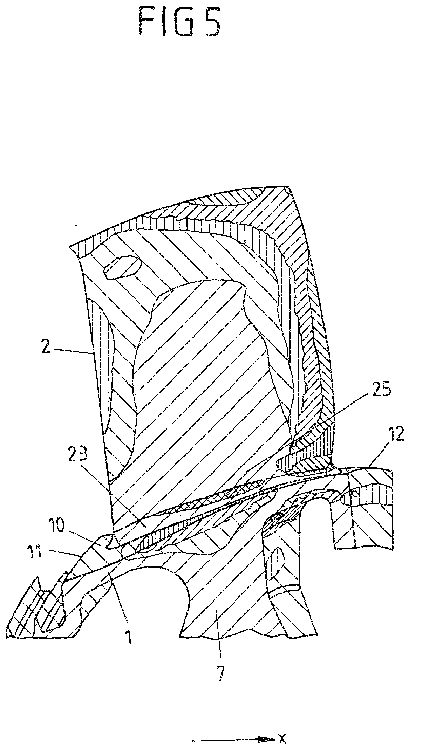

Die Figur 5 zeigt die Spannungsverteilung an einer Laufschaufel 2 und im Bereich des Schaufelkranzes 1 eines in BLISK-Technologie hergestellten Rotors. Es sind die Kranzoberfläche 10, die axial vordere Stirnseite 11, die axial hintere Stirnseite 12, der Schaufelkranz 1, der als Scheibe ausgebildete Drehkörper 7 und eine Laufschaufel 2 zu erkennen. Ein gekrümmt ausgebildeter Übergangsbereich zwischen der Laufschaufel 2 und der Kranzoberfläche 10 ist mit 23 gekennzeichnet.

Die höchste Spannung liegt dabei im kreuzschraffierten Bereich 25 vor, d.h. in einem mittleren Bereich der Schaufel 2, der einen geringen radialen Abstand zur Verbindung der Schaufel 2 zum Schaufelkranz 1 aufweist.

Aufgrund der dreidimensionalen Strukturierung der Kranzoberfläche 10 ist es möglich, ungünstige Schwingungsmoden im Drehkörper 7 und in den Laufschaufeln 2 zu vermindern, einschließlich einer Verminderung gekoppelter Scheiben-Schaufel-Moden. In einer Ausführungsvariante kann durch die dreidimensionale Konturierung erreicht werden, dass der Bereich 25 höchster Spannung der Schaufel 2 auf der Druckseite und auf der Saugseite der Schaufel 2 gleichmäßiger verteilt wird.

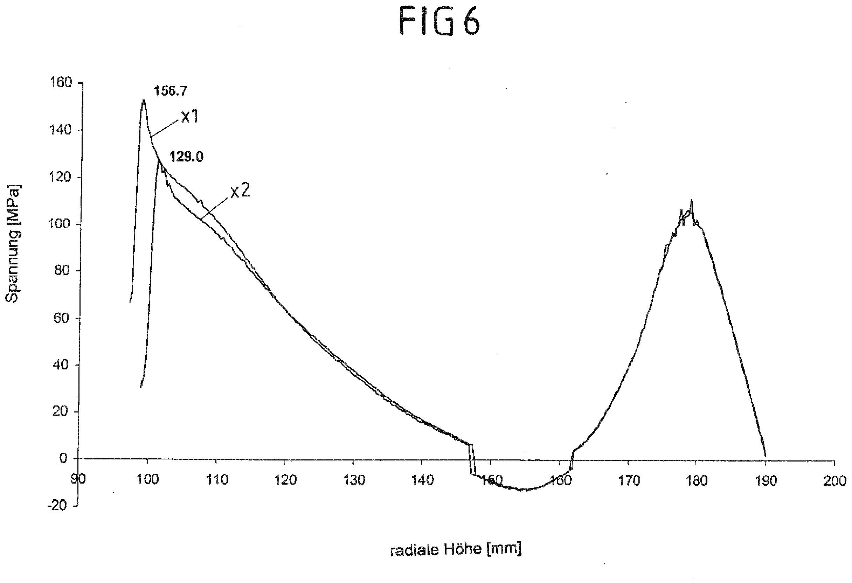

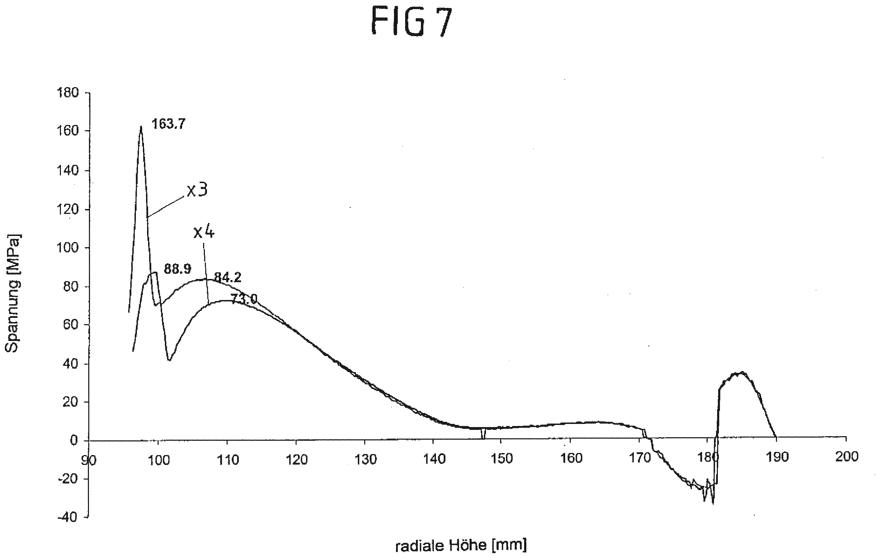

Die mit der dreidimensionalen Konturierung der Kranzoberfläche 10 verbundenen Vorteile sind anhand der Figuren 6 und 7 beispielhaft erkennbar. Die Figur 6 zeigt die mechanische Spannung an der Außenkante der Druckseite einer Schaufel eines Rotors mit dreidimensional konturierter Kranzoberfläche im Vergleich zu der entsprechenden Spannung bei einem konventionell ausgeführten Rotor mit konstantem Radius im Bereich der Kranzoberfläche. Die Figur 7 zeigt die mechanische Spannung an der Außenkante der Saugseite der Schaufel im Vergleich zu einem konventionell ausgeführten Rotor.

Es ist erkennbar, dass die Spannungsbelastung bei einem Rotor mit dreidimensional konturierter Kranzoberfläche (Graph X2 in der Figur 6 und Graph X4 in der Figur 7) deutlich niedriger liegt als bei einem konventionellen Rotor (Graph X1 in der Figur 6 und Graph X3 in der Figur 7). Insbesondere liegen deutlich reduzierte Maximalwerte nahe der Anbindung an den Schaufelkranz, d.h. bei einer geringen radialen Höhe im Bereich von ca. 100 mm vor, bei der gemäß der Figur 5 die höchsten Spannungen auftreten. Diese liegen gemäß der Figur 6 bei 129,0 MPa bei einer radialen Höhe von ca. 100 mm verglichen mit einem Wert von 156,7 MPa bei einem Rotor gemäß dem Stand der Technik. Gleiches gilt für die in der Figur 7 dargestellte Saugseite mit Werten von 88,9 MPa im Vergleich zu 183,7 MPa und - bei einem zweiten Maximum bei ca. 110 mm - mit Werten von 73,0 MPa im Vergleich zu 84,2 MPa.

Die erfindungsgemäße Lösung beschränkt sich in ihrer Ausgestaltung nicht auf die vorstehend dargestellten Ausführungsbeispiele, die lediglich beispielhaft zu verstehen sind. Insbesondere sind die dargestellten Formen der dreidimensionalen Konturierung, des Schaufelkranzes und der Laufschaufeln lediglich beispielhaft zu verstehen. Auch wird darauf hingewiesen, dass eine dreidimensionale Konturierung nicht im gesamten Bereich zwischen zwei Laufschaufeln ausgebildet sein muss, sondern auch lediglich in Teilbereichen ausgebildet sein kann. Der Einsatz eines erfindungsgemäßen Rotors ist im Übrigen nicht auf ein Strahltriebwerk beschränkt. Dieser kann auch in Axialverdichterstufen anderer Turbomaschinen eingesetzt werden.

## Patentansprüche

1. Rotor einer Axialverdichterstufe einer Turbomaschine, der aufweist:
- einen Drehkörper (7) umfassend eine Drehachse (20), einen Umfang und einen an dem Umfang angeordneten Schaufelkranz (1) mit einer radial außen liegenden Kranzoberfläche (10),, und
- eine Vielzahl an Laufschaufeln (2), die an dem Schaufelkranz (1) angeordnet sind,
wobei die Kranzoberfläche (10) zumindest einen Bereich zwischen zwei benachbarten Laufschaufeln (2) der Vielzahl der Laufschaufeln (2) aufweist, der sowohl in axialer Richtung (x) als auch in Umfangsrichtung (Φ) einen sich verändernden Radius (r) bezogen auf die Drehachse (20) des Drehkörpers (7) aufweist,
wobei in einem Bereich zwischen zwei benachbarten Laufschaufeln (2) die Kranzoberfläche (10) derart geformt ist, dass sie eine resultierende Oberflächenlinie (6) aufweist, die in Richtung einer axial hinteren Stirnseite (12) des Schaufelkranzes zunächst eine konkave Vertiefung (51) und zu dieser axial beabstandet eine konvexe Erhöhung (52) aufweist, wobei die konkave Vertiefung (51) sich am Anfang des durch jeweils zwei Laufschaufeln (2) gebildeten Schaufelkanals und die konvexe Erhöhung (52) sich in axialer Richtung hinter der konkaven Vertiefung (51) befindet,
wobei die konvexe Erhöhung (52) einen Berg einschließt, der sich im Bereich zwischen zwei benachbarten Laufschaufeln (2) mit einem Abstand sowohl zu der Saugseite (21) der einen Laufschaufel (2) als auch zu der Druckseite (22) der anderen Laufschaufel (2) erstreckt und dabei näher an der Saugseite (21) der einen Laufschaufel (2) ausgebildet ist,
wobei in dem Bereich zwischen zwei benachbarten Laufschaufeln (2) an dem die Kranzoberfläche (10) mit einer konkaven Vertiefung (51) und mit einer konvexen Erhöhung (52) geformt ist, eine zweite Oberflächenlinie (6) eines Bereiches durch den Drehkörper (7) in einer Ebene senkrecht zur Drehachse (20) des Drehkörpers (7) einer mathematischen Funktion in Form einer einzelnen Sinusfunktion oder einer einzelnen Kosinusfunktion gehorcht; und
wobei in dem Bereich zwischen zwei benachbarten Laufschaufeln (2) jeder Schnitt durch den Schaufelkranz (1) in einer Ebene senkrecht zur Drehachse (20) des Drehkörpers (7) eine Oberflächenlinie aufweist, die einer mathematischen Funktion in Form einer einzelnen Sinusfunktion oder einer einzelnen Kosinusfunktion gehorcht.

2. Rotor nach Anspruch 1, **dadurch gekennzeichnet, dass** für zumindest einen Schnitt durch den Schaufelkranz (1) in einer Ebene senkrecht zur Drehachse (20) des Drehkörpers (7) gilt, dass die resultierende Oberflächenlinie (6) im Bereich zwischen zwei Laufschaufeln (2) zumindest abschnittsweise einen sich stetig verändernden Radius aufweist.

3. Rotor nach Anspruch 1 oder 2, **dadurch gekennzeichnet, dass** für zumindest einen Schnitt durch den Schaufelkranz (1) in einer Ebene senkrecht zur Drehachse (20) des Drehkörpers (7) gilt, dass die resultierende Oberflächenlinie (6) im Bereich zwischen zwei Laufschaufeln (2) asymmetrisch ist.

4. Rotor nach Anspruch 3, **dadurch gekennzeichnet, dass** die Kranzoberfläche (10) zwischen zwei benachbarten Laufschaufeln (2) derart ausgebildet ist, dass sie angrenzend an die Saugseite der einen Laufschaufel (2) höhere Radien aufweist als angrenzend an die Druckseite der anderen Laufschaufel (2).

5. Rotor nach einem der vorangehenden Ansprüche, **dadurch gekennzeichnet, dass** für zumindest einen Längsschnitt durch den Schaufelkranz (1) gilt, dass die resultierende Oberflächenlinie (8) zwischen einer axial vorderen Stirnseite (11) und einer axial hinteren Stirnseite (12) zumindest abschnittsweise einen sich stetig verändernden Radius aufweist.

6. Rotor nach einem der vorangehenden Ansprüche, **dadurch gekennzeichnet, dass** der Radiusverlauf der Kranzoberfläche (10) durch Amplitude (A) und/oder Phasenlage (ϕ) einer trigonometrischen Funktion oder mehrerer, einander überlagerter trigonometrischen Funktionen parametrisiert ist, wobei die Werte für Amplitude (A) und/oder Phase (ϕ) vom Umfangswinkel (Φ) und der axialen Position (x) abhängig sind.

7. Rotor nach Anspruch 6, **dadurch gekennzeichnet, dass** nicht mehr als 5 trigonometrische Funktionen zur Definition der dreidimensionalen Form der Kranzoberfläche (10) eingesetzt sind.

8. Rotor nach einem der vorangehenden Ansprüche, **dadurch gekennzeichnet, dass** der Schaufelkranz (1) an der axial vorderen Stirnseite (11) und/oder der axial hinteren Stirnseite (12) kreisförmig ausgebildet ist.

9. Rotor nach einem der vorangehenden Ansprüche, **dadurch gekennzeichnet, dass** die Kranzoberfläche (10) zwischen sämtlichen Laufschaufeln (2) des Rotors jeweils die gleiche dreidimensionale Form aufweist.

10. Rotor nach einem der vorangehenden Ansprüche, **dadurch gekennzeichnet, dass** der Drehkörper (7) als Scheibe ausgebildet ist, insbesondere als BLISK mit einstückig ausgebildeten Laufschaufeln (2).

11. Rotor nach einem der vorangehenden Ansprüche, **dadurch gekennzeichnet, dass** für zumindest einen Längsschnitt durch den Schaufelkranz (1) gilt, dass die resultierende Oberflächenlinie (8) zwischen einem axial vorderen Startwert (x_{Start}) und einem axial hinteren Endwert (x_{Ende}) einen sich stetig verändernden Radius aufweist, wobei der axial vordere Startwert (x_{Start}) - in axialer Richtung betrachtet - vor den Vorderkanten der Laufschaufeln (2) und der axial hintere Endwert (x_{Ende}) - in axialer Richtung betrachtet - hinter den Hinterkanten der Laufschaufeln (2) liegt.

## Claims

1. Rotor of an axial compressor stage of a turbomachine, featuring:
- a rotor body (7) including a rotary axis (20), a circumference and a blade ring (1) arranged on the circumference with a radially outer ring surface (10), and
- a plurality of rotor blades (2) arranged on the blade ring (1),
wherein the ring surface (10) has at least one area between two adjacent rotor blades (2) of the plurality of rotor blades, which shows a changing radius (r) relative to the rotary axis (20) of the rotor body (7) both in the axial direction (x) and in the circumferential direction (Φ),
wherein in an area between two adjacent rotor blades (2) the ring surface (10) is shaped such that it has a resulting surface line (6) which shows in the direction of an axially rear face (12) of the blade ring first a concave depression (51) and at a certain axial distance to said depression a convex elevation (52), with the concave depression (51) being situated at the start of the blade duct formed by two rotor blades (2) in each case, and the convex elevation (52) being situated behind the concave depression (51) in the axial direction,
wherein the convex elevation (52) includes a mountain, which in the area between two adjacent rotor blades (2) extends at a certain distance to both, the suction side (21) of the one rotor blade (2) and the pressure side (22) of the other rotor blade (2), while being arranged closer to the suction side (21) of the one rotor blade (2),
wherein in the area between two adjacent rotor blades (2), on which the ring surface (10) is formed with a concave depression (51) and with a convex elevation (52), a second surface line (6) of an area through the rotor body (7) in a plane perpendicular to the rotary axis (20) of the rotor body (7) obeys a mathematical function in the form of a single sine function or a single cosine function, and
wherein in the area between two adjacent rotor blades (2) each section through the blade ring (1) in a plane perpendicular to the rotary axis (20) of the rotor body (7) has a surface line, which obeys a mathematical function in the form of a single sine function or a single cosine function.

2. Rotor in accordance with Claim 1, **characterized in that** for at least one section through the blade ring (1) in a plane perpendicular to the rotary axis (20) of the rotor body (7), the resulting surface line (6) in the area between two rotor blades (2) has at least in some sections a steadily changing radius.

3. Rotor in accordance with Claim 1 or 2, **characterized in that** for at least one section through the blade ring (1) in a plane perpendicular to the rotary axis (20) of the rotor body (7), the resulting surface line (6) in the area between two rotor blades (2) is asymmetrical.

4. Rotor in accordance with Claim 3, **characterized in that** the ring surface (10) between two adjacent rotor blades (2) is designed such that adjoining the suction side of the one rotor blade (2) it has higher radii than adjoining the pressure side of the other rotor blade (2).

5. Rotor in accordance with one of the preceding Claims, **characterized in that** for at least one longitudinal section through the blade ring (1) the resulting surface line (8) between an axially front face (11) and an axially rear face (12) has at least in some sections a steadily changing radius.

6. Rotor in accordance with one of the preceding Claims, **characterized in that** the course of the radius of the ring surface (10) is parameterized by the amplitude (A) and/or the phase position (ϕ) of a trigonometric function or of several trigonometric functions superimposed one over the other, with the values for amplitude (A) and/or phase position (ϕ) depending on the circumferential angle (Φ) and the axial position (x).

7. Rotor in accordance with Claim 6, **characterized in that** not more than five trigonometric functions are used for the definition of the three-dimensional contour of the ring surface (10).

8. Rotor in accordance with one of the preceding Claims, **characterized in that** the blade ring (1) on the axially front face (11) and/ or the axially rear face (12) is designed circular.

9. Rotor in accordance with one of the preceding Claims, **characterized in that** the ring surface (10) between all rotor blades (2) of the rotor has the same three-dimensional contour in each case.

10. Rotor in accordance with one of the preceding Claims, **characterized in that** the rotor body (7) is designed as a disk, especially as a BLISK with rotor blades (2) designed in one piece.

11. Rotor in accordance with one of the preceding Claims, **characterized in that** for at least one longitudinal section through the blade ring (1) the resulting surface line (8) between an axially front start value (x_{Start}) and an axially rear end value (x_{end}) has a steadily changing radius, wherein the axially front start value (x_{Start}) - when viewed in the axial direction - is situated in front of the leading edges of the rotor blades (2) and the axially rear end value (x_{end}) - when viewed in the axial direction - is situated behind the trailing edges of the rotor blades (2).

## Revendications

1. Rotor d'un étage de compresseur axial d'une turbomachine, présentant :
- un corps rotatif (7) comprenant un axe de rotation (20), une périphérie et une couronne d'aubes (1) disposée sur la périphérie avec une surface de couronne (10) située radialement à l'extérieur, et
- une pluralité d'aubes directrices (2) qui sont disposées sur la couronne d'aubes (1),
la surface de couronne (10) présentant au moins une région entre deux aubes directrices adjacentes (2) de la pluralité d'aubes directrices (2) qui présente à la fois dans la direction axiale (x) ainsi que dans la direction périphérique (φ) un rayon variable (r) par rapport à l'axe de rotation (20) du corps rotatif (7),
dans une région entre deux aubes directrices adjacentes (2), la surface de couronne (10) étant formée de telle sorte qu'elle présente une ligne de surface résultante (6) qui présente dans la direction d'un côté frontal axialement arrière (12) de la couronne d'aubes d'abord un renfoncement concave (51) et à distance axiale de celui-ci un rehaussement convexe (52), le renfoncement concave (51) se trouvant au niveau du début du canal d'aubes formé par deux aubes directrices respectives (2) et le rehaussement convexe (52) se trouvant dans la direction axiale derrière le renfoncement concave (51),
le rehaussement convexe (52) comportant un sommet qui s'étend dans la région entre deux aubes directrices adjacentes (2) à distance du côté d'aspiration (21) de l'une des aubes directrices (2) ainsi qu'à distance du côté de refoulement (22) de l'autre aube directrice (2) et qui est en l'occurrence réalisé plus près du côté d'aspiration (21) de ladite une des aubes directrices (2),
dans la région entre deux aubes directrices adjacentes (2) au niveau de laquelle la surface de couronne (10) est formée avec un renfoncement concave (51) et avec un rehaussement convexe (52), une deuxième ligne de surface (6) d'une région à travers le corps rotatif (7) dans un plan perpendiculaire à l'axe de rotation (20) du corps rotatif (7) obéissant à une fonction mathématique sous la forme d'une fonction sinus simple ou d'une fonction cosinus simple ; et
dans la région entre deux aubes directrices adjacentes (2), chaque coupe à travers la couronne d'aubes (1) dans un plan perpendiculaire à l'axe de rotation (20) du corps rotatif (7) présentant une ligne de surface qui obéit à une fonction mathématique sous la forme d'une fonction sinus simple ou d'une fonction cosinus simple.

2. Rotor selon la revendication 1, **caractérisé en ce que** pour au moins une coupe à travers la couronne d'aubes (1) dans un plan perpendiculaire à l'axe de rotation (20) du corps rotatif (7), la ligne de surface résultante (6) dans la région entre deux aubes directrices (2) présente au moins en partie un rayon variant de manière continue.

3. Rotor selon la revendication 1 ou 2, **caractérisé en ce que** pour au moins une coupe à travers la couronne d'aubes (1) dans un plan perpendiculaire à l'axe de rotation (20) du corps rotatif (7), la ligne de surface résultante (6) dans la région entre deux aubes directrices (2) est asymétrique.

4. Rotor selon la revendication 3, **caractérisé en ce que** la surface de couronne (10) entre deux aubes directrices adjacentes (2) est réalisée de telle sorte qu'elle présente, en position adjacente au côté d'aspiration de l'une des aubes directrices (2), des rayons plus hauts qu'en position adjacente au côté de refoulement de l'autre aube directrice (2) .

5. Rotor selon l'une quelconque des revendications précédentes, **caractérisé en ce que** pour au moins une coupe longitudinale à travers la couronne d'aubes (1), la ligne de surface résultante (8) entre un côté frontal axialement avant (11) et un côté frontal axialement arrière (12) présente au moins en partie un rayon variant de manière continue.

6. Rotor selon l'une quelconque des revendications précédentes, **caractérisé en ce que** l'allure du rayon de la surface de couronne (10) est paramétrée par l'amplitude (A) et/ou la position de phase (ϕ) d'une fonction trigonométrique ou de plusieurs fonctions trigonométriques superposées les unes aux autres, les valeurs pour l'amplitude (A) et/ou la phase (ϕ) dépendant de l'angle périphérique (φ) et de la position axiale (x).

7. Rotor selon la revendication 6, **caractérisé en ce que** pas plus de 5 fonctions trigonométriques sont utilisées pour définir la forme tridimensionnelle de la surface de couronne (10).

8. Rotor selon l'une quelconque des revendications précédentes, **caractérisé en ce que** la couronne d'aubes (1) est réalisée sous forme circulaire au niveau du côté frontal axialement avant (11) et/ou du côté frontal axialement arrière (12).

9. Rotor selon l'une quelconque des revendications précédentes, **caractérisé en ce que** la surface de couronne (10) entre toutes les aubes directrices (2) du rotor présente à chaque fois la même forme tridimensionnelle.

10. Rotor selon l'une quelconque des revendications précédentes, **caractérisé en ce que** le corps rotatif (7) est réalisé sous forme de disque, en particulier sous forme de BLISK avec des aubes directrices (2) réalisées d'une seule pièce.

11. Rotor selon l'une quelconque des revendications précédentes, **caractérisé en ce que** pour au moins une coupe longitudinale à travers la couronne d'aubes (1), la ligne de surface résultante (8) entre une valeur de départ axialement avant (x_{Start}) et une valeur de fin axialement arrière (x_{Ende}) présente un rayon variant de manière continue, la valeur de départ axialement avant (x_{Start}) - vu dans la direction axiale - étant située avant les bords avant des aubes directrices (2) et la valeur de fin axialement arrière (x_{Ende}) - vu dans la direction axiale - étant située derrière les bords arrière des aubes directrices (2).
